(19) Europäisches Patentamt
European Patent Office
Office européen des brevets

(11) Publication number: **0 117 000 B1**

(12) **EUROPEAN PATENT SPECIFICATION**

(45) Date of publication of patent specification: **31.08.88**

(51) Int. Cl.$^4$: **E 04 D 5/06,** C 08 F 214/06, C 08 L 27/06

(21) Application number: **84200187.7**

(22) Date of filing: **09.02.84**

(54) **Roof containing plastic membrane.**

(30) Priority: **11.02.83 US 465750**

(43) Date of publication of application:
**29.08.84 Bulletin 84/35**

(45) Publication of the grant of the patent:
**31.08.88 Bulletin 88/35**

(84) Designated Contracting States:
**BE CH DE FR GB IT LI NL SE**

(56) References cited:
**EP-A-0 011 415**
**DE-A-2 058 762**
**US-A-4 358 499**

**F.S. MERRIT, "Building Construction Handbook", second edition, Mc Graw-Hill Book Company, New York**

(73) Proprietor: **STAUFFER CHEMICAL COMPANY**
**Westport Connecticut 06880 (US)**

(72) Inventor: **Goswami, Jagadish Chandra**
**14 Capitol Court**
**New City, NY 10956 (US)**
Inventor: **Grimes, Whiteford Duncan**
**2958 Front Road**
**Jacksonville, FL 32217 (US)**
Inventor: **Hornibrook, Walter John**
**31 Wather Oak Hill**
**New windsor, NY 12550 (US)**

(74) Representative: **Urbanus, Henricus Maria, Ir. et al**
**c/o Vereenigde Octrooibureaux Nieuwe Parklaan 107**
**NL-2587 BP 's-Gravenhage (NL)**

**EP 0 117 000 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to a novel roof structure which comprises, in cooperative combination, a roof support, a roof deck lying on the roof support, an insulation, and a roofing membrane lying over the insulation.

Roofing membranes containing vinyl chloride polymers in conjunction with external plasticizers are known. Such products, however, have a number of shortcomings. The plasticizer can migrate from the membrane causing embrittlement and possible shrinkage with the passage of time. Also, the presence of the external plasticizer can cause incompatibility between the membrane and such adjacent roofing materials as foam insulation, coal tar bonding substances, and the like. Incompatibility will manifest itself by the lack of secure bonding between the membrane and such adjacent materials thereby allowing for the penetration of such undesired elements as moisture, heat or cold, and the like, into the interior of the building.

It has been suggested in British Patent No. 1,399,282 that vinyl acetate-ethylene copolymer be added to roofing membranes as an external, non-migratory plasticizer for vinyl chloride polymers in an apparent effort to overcome the problems associated with external plasticization. Such resulting roofing membranes would also contain bitumen.

US—A—4,358,499 discloses a PVC roofing membrane which is cast from a plastisol. Although the reference mentions the possibility of using an internally plasticized vinyl chloride copolymer resin, it is always used in smaller amounts than the predominant PVC resin as a plasticizer for the PVC resin.

An internally plasticized resin has been suggested for use in vapor barrier formulations for buildings, in EP—A—0011415. Since the purpose of such vapour barrier film is to retard the transmission of water vapour into or from the interior of the buildings, it must always be applied on the warm side of the insulation, as is stated by F. S. Merritt, "Building Construction Handbook", second edition, McGraw-Hill Book Company, New York, pages 18-7 and 18-8. There has been no suggestion of using such a formulation in a roofing system due to its unacceptable low temperature and elongation characteristics. Preformed elastomeric roofing membranes should generally have ultimate elongations of from about 200% to about 400% and should be able to withstand low temperature conditions of −30°C or lower, preferably −40°C or lower, without cracking upon impact, e.g., from footsteps, hail stones, falling tree branches, etc., and without loss of flexibility, e.g., as manifested by loss of elongation characteristics. The vapor barrier formulations shown in EP—A—0011415 have unacceptably lower elongation characteristics (i.e., 100—195%) and inferior lower temperature characteristics (e.g., Clash-Berg temperatures of 0° to −25°C) for roofing applications. Clash-Berg temperature is a parameter defined in US—A—4,147,853 and can be determined by the procedure of ASTM D 1043.

The present invention comprises a roof structure characterized in that roofing membrane comprises an internally plasticized vinyl chloride copolymer resin in larger amount than any other polymeric or resinous component of the roofing membrane and is composed such as to obtain a Clash-Berg temperature of −30°C or below and an ultimate elongation characteristic of no less than 200%.

Roofing membranes conventionally are supported by a roof deck formed of a durable building material such as concrete, metal, or wood. The roof deck is, in turn, supported by the upper portion of suitable roof support means which are also formed of a durable building material. Insulation (e.g., glass fibers, expanded foam, etc.) is disposed between the roofing membrane and roof deck. The top of such roofs generally also contain a ballast layer formed of thin concrete or mortar slabs, tiles, pebbles, gravel or the like, to protect the underlying layers and to provide sufficient mass to prevent either flotation of the membrane/insulation layer(s) by water lying on the roof and/or movement due to strong winds. U.S. Patent Nos. 3,411,256, 3,763,614 and 4,045,934 illustrate the general structure of roofs to which the present invention relates.

The present invention relates to the use of a plastic roofing membrane comprising a predominant amount of an internally plasticized vinyl chloride copolymer resin in the type of roof structure described above. The word "predominant" as used herein is to be construed as meaning that the internally plasticized resin is present in larger amount than any other polymeric or resinous component.

The terminology "internally plasticized vinyl chloride copolymer" is intended to cover those copolymers formed from a reaction medium which comprises an effective amount of at least one plasticizing comonomer for vinyl chloride monomer. Internally plasticized resins, therefore, are those which have a plasticizing agent copolymerized into the resin during polymerization as opposed to a resin to which a plasticizer is added during compounding.

Internally plasticized vinyl chloride copolymer resins suitable for use in the present invention can be formed by polymerizing vinyl chloride monomer in the presence of an effective amount (e.g., 10% to 50%, by weight) of at least one comonomer which functions as an internal plasticizer. Included within this class are the alkyl acrylates and methacrylates containing up to about 18 carbon atoms in their alkyl groups, the vinyl esters of carboxylic acids and ethylenically unsaturated dicarboxylic acids, their anhydrides, and their mono- and dialkyl esters containing up to about 20 carbon atoms in their alkyl groups.

The internally plasticized resin suitable for use in the present invention should have a Tg (i.e. glass transition temperature) of from about −10°C. to about 30°C. and should give a vinyl film having a Shore "A"

hardness of about 80 to about 95 when no functional additives nor substantial amounts of plasticizer are present.

A preferred internally plasticized copolymer resin for use in the roofing membrane used in the present invention is described in U.S. Patent No. 4,147,853 to J. C. Goswami et al., which is incorporated herein by reference. This copolymer comprises: (1) from about 50% to about 85%, by weight, vinyl chloride; (2) from about 3% to about 47%, by weight, of a $C_6$—$C_{10}$ alkyl acrylate; and from about 47% to about 3%, by weight, of a bis(hydrocarbyl)vinylphosphonate of the formula:

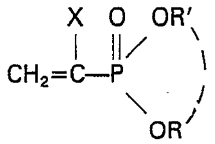

wherein X is selected from the group consisting of hydrogen, halogen, cyano, aryl, such as phenyl, $C_1$—$C_{18}$ alkyl and

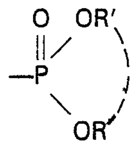

wherein R and R′ are hydrocarbyl and substituted hydrocarbyl groups consisting essentially of hydrogen and carbon, and containing up to about 18 carbon atoms, inclusive, with the proviso that R and R′ may be the same, different or conjoint, i.e., R and R′ may combine to form one single radical.

Preferred weight amounts for the comonomers used to make the copolymer are: (1) from about 55% to about 80%, by weight, vinyl chloride; (2) from about 10% to about 35%, by weight, of the acrylate; and (3) from about 5% to about 25% by weight of the vinylphosphonate. A particularly preferred acrylate is 2-ethylhexyl acrylate, while particularly preferred vinylphosphonates are bis(beta-chloroethyl)-vinylphosphonate and bis(2-ethylhexyl)vinylphosphonate.

The aforementioned internally plasticized copolymer can be formed by conventional bulk, emulsion, suspension, or solution polymerization procedures, although suspension polymerization is preferred.

Also useful in the present invention is the internally plasticized resin described in U.S. Patent No. 4,210,739 to R. E. Gallagher et al. which comprises from about 45% to about 80%, by weight, vinyl chloride, from about 15% to about 54%, by weight, of a $C_2$—$C_{10}$ alkyl acrylate, and from about 10% to about 15% by weight, of at least one $C_8$—$C_{22}$ dialkyl maleate or fumarate.

The use of the above-described internally plasticized resin allows for production of a roofing membrane having the desired degree of flexibility without the use of significant amounts (i.e., over about 15—20%) of external plasticizer such as employed in certain prior art membranes containing vinyl chloride polymers. Liquid external plasticizer tends to migrate from the membrane causing such problems as embrittlement and possible shrinkage of the membrane. Generally speaking, the amount of internally plasticized resin in the membrane can range from about 25% to about 75%, by weight of the membrane depending upon the precise type of membrane required.

In order to confer the most desired low temperature characteristics on the roofing membrane, a polymeric ingredient capable of improving such characteristics is also preferably included in the formulation in an amount less than the amount of internally plasticized resin. This additive can be present at from about 5% to about 40%, by weight of the membrane. Exemplary additives include chlorinated polyethylene (chlorine content: 25%—48%, by weight, preferably 36%—42%) and ethylene/carbon monoxide terpolymers of the type described in U.S. Patent No. 3,780,140 to C. F. Hammer. The latter are available under the trademark Elvaloy® from E. I. du Pont de Nemours and Company and comprise 40—80% ethylene, 3—30% carbon monoxide and 10—60% termonomer (e.g., vinyl acetate).

A number of other additives are used in making the roofing membrane used in the present invention. Included as potential additives are the following:

(a) fillers and/or pigments. The amount of filler that is chosen can range from about 0% to about 40%, by weight. Fillers and pigments are used to control color, opacity and flammability, to control cost without sacrifice in desired properties, and to aid in the calendering of the film forming composition. Representative fillers include such inorganic fillers as titanium dioxide, antimony oxide, calcium carbonate, zinc oxide, white lead, gypsum, precipated silica, carbon black, and red iron oxide. Others are well known to a person of ordinary skill in the art.

(b) monomeric and polymeric process aids. These additives serve to aid in the processing of the calenderable film forming composition. Included are polymeric additives such as poly(alpha methyl)styrene or acrylic polymers which function as process aids. These additives may be used at from about 3% to about 10%, by weight of the film.

(c) lubricants. These may be present at from about 0.5% to about 3%, by weight of the film. Included as

representative lubricants are stearic acid, stearamide, the polyethylene waxes, hydrocarbon oils, and the like.

(d) stabilizers and antioxidants. These may be present at from about 3% to about 10%, by weight of the film. Included are the stearate salts, the epoxidized vegetable oils, alkyl-aryl phosphites, dibutyl tin dilaurate, and tin mercaptides. Others that may be selected are well known to persons of ordinary skill in the art.

Other functional additives that can be present in relatively minor amount (under 2% by weight, of the film) include ultraviolet light stabilizers, drying agents, and the like.

The first step in forming the sheet of the present invention, in accordance with a preferred embodiment is the formation of a film forming composition which can be calendered and which has good chemical resistance and outdoor durability. The aforementioned internally plasticized resin, filler and/or pigment, monomeric and polymeric process aid, lubricant, and stabilizers and antioxidant components can be selected in the aforementioned amounts, if desired. These selected ingredients are mixed until they are in the form of a homogeneous powdery composition. They can be then mixed under sufficient heat and pressure to yield a composition of a more fluid consistency. After passing through a strainer apparatus they are ready for calendering.

This film formulation is then calendered at a temperature and pressure which allows formation of a film having a preferred thickness of about 500 µm to about 1250 µm. A calendering temperature of from about 120°C. to about 160°C. is recommended.

The following Examples illustrate certain embodiments of the present invention.

Example 1

This Example sets forth the process for making a preferred roofing membrane for use in accordance with the present invention.

Each of the materials listed below were added to a blender and mixed for twenty minutes at 20°C.

| Ingredient | Parts by weight*** |
|---|---|
| Clay extender (Burgess KE® Brand) | 11.0 |
| Titanium oxide/colored pigment blend* | 6.2 |
| Antimony oxide flame retardant (Chemetron L® brand) | 2.00 |
| Internally plasticized resin** | 35.00 |
| Ba/Cd heat stabilizer (Synpron® 1517 brand) | 5.00 |

*comprises 6.05 parts by weight $TiO_2$ with the remainder being colored pigments.

**this is a copolymer of 75% vinyl chloride, 18% 2-ethylhexyl acrylate, and 7% bis(betachloroethyl)-vinylphosphonate.

***based on the weight of all ingredients used.

To the resulting mixture were added the following which were then mixed for ten minutes at 20°C:

| Ingredient | Parts by weight |
|---|---|
| Dioctyl azelate plasticizer | 6.93 |
| Arsenical fungicide solution (Vinyzene BP®-5 brand) | 2.75 |
| Hindered phenolic antioxidant (Irganox® 1010 brand) | 1.32 |
| Phosphite chelator (Synpron® 1535 brand) | 0.50 |

To the resulting mixture were added the following ingredients, and mixing was initiated for an additional 15 minutes at 20°C.

| Ingredient | Parts by weight |
|---|---|
| Poly α-methyl styrene process aid (Amoco® 18-210 brand) | 3.00 |
| Bis-stearamide lubricant (Advawax® 240 brand) | 0.30 |
| Partially oxidized polyethylene lubricant (PE®-190 brand) | 0.50 |
| Chlorinated polyethylene (Dow CPE®-3614) | 25.00 |
| Dilauryl thiodipropionate | 0.50 |

The homogeneous mixture from the blender was conveyed to a continuous mixer and was mixed at a temperature of 135°C. until a soft, plastic calenderable mass was formed. This mass was then calendered at a temperature of 150°C. to form a film having a thickness of 530 μm.

Example 2

This Example illustrates the tensile strength, percent elongation and secant modulus at 100% elongation for films made in accordance with Example 1 after various types of conditioning treatments. "MD" stands for the "machine direction" of calendering, whereas "CD" stands for the "cross direction".

| Sample size-condition | Tensile str. (MD/CD) (kg/cm$^2$) | % Elong. (MD/CD) | Sec. Mod. at 100% elong. (MD/CD) (kg/cm$^2$) |
|---|---|---|---|
| A —untreated— | 75.09/54.00 | 386/470 | 41.20/29.32 |
| B —untreated— | 74.86/56.03 | 403/490 | 42.32/30.94 |
| A —Heat aged (130°C./24 hrs.) with 18 hr. recovery— | 114.39/95.06 | 328/348 | 71.43/55.96 |
| B —Heat aged* (79.4°C./7 days)— | 73.28/53.50 | 390/450 | 43.73/28.47 |
| C —Heat aged** (79.4°C./21 days)— | 72.28/59.83 | 358/398 | 50.13/37.26 |
| B —3 month accelerated aging$^x$ | 68.90/48.58 | 316/422 | 47.11/31.50 |
| B —3 month accelerated aging$^{xx}$ | 64.89/50.76 | 344/325 | 42.68/36.07 |
| B —Coated with coal tar and aged for 3 months$^+$— | 59.13/39.37 | 340/460 | 34.59/23.34 |

Sample size A was 11.43 cm.×0.64 cm. with a thickness of 533.4 μm.
Sample Size B was 7.63 cm.×0.64 cm. with a thickness of 533.4 μm.
Sample size C was 7.63 cm.×0.64 cm. with a thickness of 965.2—1041.4 μm.

*heat aging was performed between expanded polystyrene insulation. No effect was noted on the insulation. This shows good compatibility between these two substances.

**heat aging was performed between expanded polystyrene insulation. No effect was noted on the insulation.

$^x$accelerated aging was performed in a Fade-O-Meter accelerated aging apparatus using test procedure ASTM D1501 with the variations of using 24 alternating sunlamps and black lights and conducting the test at ambient temperature without added moisture.

$^{xx}$accelerated aging was performed in a Weather-O-Meter accelerated aging apparatus using test procedures ASTM G26 (machine operation) and D-2565 (sample exposure procedures).

$^+$coated with 76.2—127.0 μm of coal tar. The coal tar adherence to the film was good after 3 mos. This illustrates good compatibility and indicates that the instant roofing membrane can be installed adjacent an asphalt or coal tar surface in the roof without the additional presence of a separator or barrier sheet.

Example 3

The ingredients listed below were milled on a two-roll mill at about 162.8°C. to abnout 165.6°C. for about 10 minutes:

| Ingredient | Parts by weight |
|---|---|
| Internally plasticized resin (from Example 1) | 35.0 |
| Chlorinated polyethylene | 25.0 |
| Poly(alpha methyl) styrene processing aid | 3.0 |
| Dioctyl azelate plasticizer | 6.0 |
| Octyl epoxy tallate (Drapex® 4.4 brand) | 4.0 |
| Ba/Cd stabilizer (Synpron® 1517 brand) | 3.0 |
| Phosphite chelator (Synpron® 1535 brand) | 0.5 |
| Dilauryl thiodipropionate | 0.5 |
| Titanium dioxide pigment | 9.0 |
| Partially oxidized polyethylene (PE-190 brand) | 0.7 |
| Bis-stearamide lubricant (Advawax® 240 brand) | 0.3 |
| Antimony oxide flame retardant (Chemetron® L brand) | 2.0 |
| Clay extender (Burgess KE® brand) | 11.0 |

Three differing formulations were prepared with the difference being the type of chlorinated polyethylene:

| Formulation | Type of CPE |
|---|---|
| A | Dow® CPE 4213* brand |
| B | Dow® CPE 3614** brand |
| C | Dow® CPE 3615*** brand |

*Dow® CPE-4213 has a chlorine content of 42% and a melt viscosity of 18,500 poises.
**Dow® CPE-3614 had a chlorine content of 36% and a melt viscosity of 21,500 poises.
***Dow® CPE-3615 has a chlorine content of 36% and a melt viscosity of 26,500 poises.

Masland impact test results (ASTM D-1790-76) for each formulation are as follows:

| Formulation | −28.9°C | −34.4°C | −40°C |
|---|---|---|---|
| A | Failed | Not tested | Not tested |
| B | Passed | Passed | Passed |
| C | Passed | Passed | Passed |

These data indicate that it is preferred to use the chlorinated polyethylene having the 36% chlorine content as contrasted to the 42% chlorine level.

Comparative Example 4

This Example illustrates, for comparative purposes, certain selected physical properties for a commercially available externally plasticized vinyl roofing membrane for comparison against the results shown in Examples 2 and 4, for example, relating to the instant invention.

| Sample size-condition | Tensile str. (MD/CD) (kg/cm²) | % Elong. (MD/CD) | Sec. Mod. at 100% elong. (MD/CD) (kg/cm²) |
|---|---|---|---|
| A —untreated— | 189.97/186.38 | 390/383 | 90.63/90.84 |
| B —untreated— | 204.59/194.26 | 410/388 | 100.26/93.58 |
| B —Heat aged* (79.4°C./7 days)— | 191.24/177.31 | 330/317 | 111.23/107.29 |
| B —Heat aged** (79.4°C. for 21 days)— | 205.16/216.62 | 350/358 | 128.31/127.89 |
| B —Coated with coal tar and aged for 3 months—*** | 153.27/154.46 | 275/240 | 82.68/93.93 |

Sample size A was 11.43 cm.×0.64 cm. with a thickness of 1168.4—1193.8 µm.
Sample Size B was 7.63 cm.×0.64 cm. with a thickness of 1168.4—1193.8 µm.
*heat aging was performed between expanded polystyrene insulation. About 50% of the insulation became compressed as a result of the test.
**heat aging was performed between expanded polystyrene insulation which became completely compressed.
***the coal tar layer flaked off after the aging period.

The above data indicate loss of elongation characteristics and consequent embrittlement for the conventional externally plasticized roofing membrane after aging.

Example 5

This Example illustrates fabrication of a roofing membrane using an ethylene/carbon monoxide terpolymer as a low temperature improvement agent, rather than chlorinated polyethylene, as used in the preceding Examples.

The following ingredients were utilized.

| Ingredient | Parts by weight |
|---|---|
| Internally plasticized resin* | 40.00 |
| Ethylene/carbon monoxide/vinyl acetate terpolymer (Elvaloy® 741 P brand) | 10.00 |
| Calcium carbonate filler (Atomite® brand) | 15.00 |
| Polyvinyl chloride suspension resin (SCC-608 brand) | 7.00 |
| Octyl epoxy tallate (Drapex® 4.4 brand) | 7.00 |
| Titanium dioxide pigment (R960 brand) | 4.70 |
| Acrylic process aid (K®-175 brand) | 3.00 |
| Ba/Cd stabilizer (Synpron® 1517 brand) | 3.00 |
| Cycloaliphatic epoxide (ERL®-4221 brand) | 3.00 |
| Arsenical fungicide solution (Vinyzene BP®-5 brand) | 2.00 |
| Antimony oxide flame retardant (Chemtron L® brand) | 1.50 |
| Phosphite chelator (Synpron® 1535 brand) | 1.00 |
| Dilauryl thiodipropionate | 0.75 |
| Butylated hydroxytoluene | 0.75 |
| Partially oxidized polyethylene (PE-190 brand) | 0.50 |
| Bis-stearamide lubricant (Advawax® 240 brand) | 0.50 |
| Fumes silica (MS-7 brand) | 0.30 |

*as used in Examples 1 and 3.

The above ingredients were milled on a two roll mill at about 160°C. to about 170°C. for about 25 minutes to form a film having a thickness of about 635 µm. The following physical properties were observed for the film:

| Property | Result | |
|---|---|---|
| Tensile strength at room temperature | 89.6 kg/cm² | (MD) |
| Tensile strength after heat ageing (130°C. for 24 hrs. with 18 hr. recovery) | 112 kg/cm² | (MD) |
| Elongation at room temperature | 298% | (MD) |
| Elongation after heat ageing | 302% | (MD) |
| Elmendorf tear strength at room temperature (ASTM D751-68) | 33.5/68.1 kg/cm | (MD/CD) |
| Elmendorf tear strength after heat ageing (ASTM D751-68) | 50.4/80 kg/cm | (MD/CD) |
| Shore A hardness (10 sec) | 71—72 | |

These data show good retention of tensile strength, elongation and tear strength after heat ageing of the film.

Example 6

This Example sets forth a process for making another preferred roofing membrane for use in accordance with the present invention.

A clean blender running at low speed was used to blend, at 10°—15.6°C. for 15 minutes, the internally plasticized resin, calcium carbonate filler, antimony oxide flame retardant, PVC resin, butylated hydroxytoluene, dilauryl thiodipropionate, Ba/Cd stabilizer and titanium dioxide pigments described in Example 5 in the weight amounts shown in that Example. The cycloaliphatic epoxide, octyl epoxy tallate, arsenical fungicide solution, and phosphite chelator shown in Example 5, were then charged into the blender and mixing was continued for an additional seven minutes of mixing. The acrylic process aid, partially oxidized polyethylene, bis-stearamide lubricant, and fumed silica, in the amounts described in Example 5, were then added to the blender and mixing was continued for an additional ten minutes. The ethylene/carbon monoxide/vinyl acetate terpolymer shown in Example 5 was then added to the blender and the resulting mixture was mixed for ten additional minutes.

The composition resulting from the above described procedure was conveyed to a Banbury blender where it was mixed at 165.6°C. until a calenderable mass was formed. This mass was then passed through an extruder to a four roll calender where it was calendered at 162—177°C. to form a film having a thickness of 686—737 μm.

Example 7

Various physical properties, analogous to those in Example 5, were determined for the third roll and tenth roll of material (686—737 μm thick) obtained from the calendering operation described in Example 6:

Third roll:

| Property | Result | |
|---|---|---|
| Tensile strength at room temperature | 113.5/83.8 kg/cm² | (MD/CD) |
| Tensile strength after heat ageing (130°C. for 24 hrs. with 18 hr. recovery) | 135.3/122.3 kg/cm² | (MD/CD) |
| Elongation at room temperature | 326%/322% | (MD/CD) |
| Elongation after heat ageing | 332%/323% | (MD/CD) |
| Elmendorf tear strength at room temperature | 33.5/97.6 kg/cm | (MD/CD) |
| Elmendorf tear strength after heat ageing | 37.4/>98.4* kg/cm | (MD/CD) |
| Shrinkage (after 6 hrs. at 80°C.) | −6.2%/0 | (MD/CD) |
| Tensile strength after exposure (800 hrs.) to UV light** | 114.2 kg/cm² | (MD) |
| % Elongation after exposure (800 hrs.) to UV light** | 280% | (MD) |
| Tenth roll: | | |
| Tensile strength at room temperature | 92.0/69.0 kg/cm² | (MD/CD) |
| Tensile strength after heat ageing (130°C. for 24 hrs. with 18 hr. recovery) | 121.9/101.7 kg/cm² | (MD/CD) |
| Elongation at room temperature | 260%/313% | (MD/CD) |
| Elongation after heat ageing | 322%/290% | (MD/CD) |
| Elmendorf tear strength at room temperature | 22.8/81.9 kg/cm | (MD/CD) |
| Elmendorf tear strength after heat ageing | 37.0/>98.4* kg/cm | (MD/CD) |
| Shrinkage (after 6 hrs. at 80%) | −11.% | (MD/CD) |

*the values indicated ">98.4" were off the scale of the measuring apparatus.

**test performed using a UV/moisture cycle at 50°C. in a QUV brand apparatus using ASTM G-53 test procedure.

**Claims**

1. A roof structure which comprises, in cooperative combination, a roof support, a roof deck lying on the roof support, an insulation and a roofing membrane lying over the insulation, characterized in that the roofing membrane comprises an internally plasticized vinyl chloride copolymer resin in larger amount than any other polymeric or resinous component of the roofing membrane and is composed such as to obtain a Clash-Berg temperature of −30°C or below and an ultimate elongation characteristic of no less than 200%.

2. A roof structure as claimed in Claim 1 wherein the internally plasticized resin comprises from about 25% to about 75%, by weight of the membrane.

3. A roof structure as claimed in Claim 1 wherein the membrane also comprises chlorinated polyethylene in a lesser amount than that of the internally plasticized resin.

4. A roof structure as claimed in Claim 3 wherein the chlorinated polyethylene comprises from about 5% to about 40%, by weight of the membrane.

5. A roof structure as claimed in Claim 1 wherein the internally plasticized resin comprises from about 50% to about 85% by weight vinyl chloride, from about 3% to about 47% of a $C_6$—$C_{10}$ alkyl acrylate, and from about 47% to about 3%, by weight of a bis(hydrocarbyl) vinylphosphonate.

6. A roof structure as claimed in Claim 1 wherein the internally plasticized vinyl chloride copolymer comprises from about 55% to about 80%, by weight, vinyl chloride, from about 10% to about 35%, by weight, 2-ethylhexyl acrylate, and from about 5% to about 25%, by weight, bis(beta-chloroethyl)vinylphosphonate.

7. A roof structure as claimed in Claim 3 wherein the chlorinated polyethylene has a chlorine content of from about 25% to about 48%, by weight.

8. A roof structure as claimed in Claim 1 wherein the internally plasticized vinyl chloride copolymer is present at from about 25% to about 75%, by weight, and chlorinated polyethylene is also present at from about 5% to about 40%, by weight of the membrane.

9. A roof structure as claimed in Claim 8 wherein the chlorinated polyethylene has a chlorine content of from about 36% to about 42%, by weight.

10. A roof structure as claimed in Claim 8 in which the vinyl chloride copolymer comprises from about 55% to about 80%, by weight, vinyl chloride, from about 10% to about 35%, by weight, of a $C_6$—$C_{10}$ alkyl acrylate, and from about 5% to about 25%, by weight, of a bis-(hydrocarbyl)vinylphosphonate.

11. A roof structure as claimed in Claim 9 in which the vinyl chloride copolymer comprises from about 55% to about 80%, by weight, vinyl chloride, from about 10% to about 35%, by weight, 2-ethylhexyl acrylate, and from about 5% to about 25%, by weight, bis(beta-chloroethyl)vinylphosphonate.

12. A roof structure as claimed in Claim 1 wherein the membrane also comprises an ethylene/carbon monoxide terpolymer in a lesser amount than that of the internally plasticized resin.

13. A roof structure as claimed in Claim 1 wherein the internally plasticized resin is present at from about 25% to about 75%, by weight of the membrane, and an ethylene/carbon monoxide/vinyl acetate terpolymer is present at from about 20% to about 50%, by weight of the membrane.

**Patentansprüche**

1. Dachgefüge mit der zusammenwirkenden Kombination aus einer Stützkonstruktion für das Dach, einem auf der Stützkonstruktion liegenden Dachbelag, einer Isolierung und einer über der Isolierung liegenden Dachmembran, dadurch gekennzeichnet, daß die Dachmembran ein intern plastifiziertes Vinylchlorid-Copolymerharz in einer Menge enthält, die größer ist als die jeder anderen polymeren oder harzartigen Komponente der Dachmembran und derart zusammengesetzt ist, daß eine Clash-Berg-Temperatur von −30°C oder tiefer und eine Bruchdehnungscharakteristik von nicht weniger als 200% erhalten wird.

2. Dachgefüge nach Anspruch 1, bei dem das intern plastifizierte Harz etwa 25 bis etwa 75% des Membrangewichts ausmacht.

3. Dachgefüge nach Anspruch 1, bei dem die Membran weiterhin chloriertes Polyethylen in einer Menge enthält, die kleiner ist als die des intern plastifizierten Harzes.

4. Dachgefüge nach Anspruch 3, bei dem das chlorierte Polyethylen etwa 5 bis etwa 40% des Membrangewichts ausmacht.

5. Dachgefüge nach Anspruch 1, bei dem das intern plastifizierte Harz etwa 50 bis etwa 85 Gew.-% Vinylchlorid, etwa 3 bis etwa 47% $C_6$—$C_{10}$ Alkylacrylat und etwa 47 bis etwa 3 Gew.-% Bis(hydrocarbyl)-vinylphosphonat enthält.

6. Dachgefüge nach Anspruch 1, bei dem das intern plastifizierte Vinylchlorid-Copolymer etwa 55 bis etwa 80 Gew.-% Vinylchlorid, etwa 10 bis etwa 35 Gew.-% 2-Ethylhexylacrylat und etwa 5 bis etwa 25 Gew.-% Bis(beta-chlorethyl)vinylphosphonat enthält.

7. Dachgefüge nach Anspruch 3, bei dem das chlorierte Polyethylen einen Chlorgehalt von etwa 25 bis etwa 48 Gew.-% hat.

8. Dachgefüge nach Anspruch 1, bei dem das intern plastifizierte Vinylchlorid-Copolymer etwa 25 bis etwa 75 Gew.-% und das chlorierte Polyethylen etwa 5 bis etwa 40 Gew.-% der Membran ausmachen.

9. Dachgefüge nach Anspruch 8, bei dem das chlorierte Polyethylen einen Chlorgehalt von etwa 36 bis etwa 42 Gew.-% hat.

10. Dachgefüge nach Anspruch 8, bei dem das Vinylchlorid-Copolymer etwa 55 bis etwa 80 Gew.-% Vinylchlorid, etwa 10 bis etwa 35 Gew.-% $C_6$—$C_{10}$ Alkylacrylat und etwa 5 bis etwa 25 Gew.-% Bis(hydrocarbyl)vinylphosphonat enthält.

11. Dachgefüge nach Anspruch 9, bei dem das Vinylchlorid-Copolymer etwa 55 bis etwa 80 Gew.-% Vinylchlorid, etwa 10 bis etwa 35 Gew.-% 2-Ethylhexylacrylat und etwa 5 bis etwa 25 Gew.-% Bis(beta-chlorethyl)vinylphosphonat enthält.

12. Dachgefüge nach Anspruch 1, bei dem die Membran außerdem ein Ethylen/Kohlenmonoxid-Terpolymer in einer Menge enthält, die kleiner ist als die des intern plastifizierten Harzes.

13. Dachgefüge nach Anspruch 1, bei dem das intern plastifizierte Harz etwa 25 bis etwa 75 Gew.-% der Membran und ein Ethylen/Kohlenmonoxid/Vinylacetat-Terpolymer etwa 20 bis etwa 50 Gew.-% der Membran ausmachen.

**Revendications**

1. Une structure de toit qui comprend, en association de coopération, un support de toit, un lattis de toit posé sur le support de toit, une isolation et une membrane de toit superposée à l'isolation, caractérisée en ce que la membrane de toit comprend une résine copolymère de chlorure de vinyle à plastification interne en quantité supérieure à tout autre composant polymère ou résineux de la membrane de toit et en ce que sa composition est telle que l'on obtienne une température de Clash-Berg égale ou inférieure à −30°C et une caractéristique d'allongement final égale ou supérieure à 200%.

2. Une structure de toit selon la revendication 1, dans laquelle la résine à plastification interne constitue environ 25% à 75% en poids de la membrane.

3. Une structure de toit selon la revendication 1, dans laquelle la membrane comprend également du polyéthylène chloré en quentité inférieure à celle de la résine à plastification interne.

4. Une structure de toit selon la revendication 3, dans laquelle le polyéthylène chloré constitue environ 5% à environ 40% en poids de la membrane.

5. Une structure de toit selon la revendication 1, dans laquelle la résine à plastification interne comprend d'environ 50% à environ 85% en poids de chlorure de vinyle, d'environ 3% à environ 47% en poids d'un acrylate d'alkyle en $C_6$ à $C_{10}$ et d'environ 47% à environ 3% en poids d'un bis(hydrocarbyl)vinylphosphonate.

6. Une structure de toit selon la revendication 1, dans laquelle le copolymère de chlorure de vinyle à plastification interne comprend d'environ 55% à environ 80% en poids de chlorure de vinyle, d'environ 10% à environ 35% en poids de 2-éthylhexylacrylate et d'environ 5% à environ 25% en poids de bis(béta-chloroéthyl)vinylphosphonate.

7. Une structure de toit selon la revendication 3, dans laquelle le polyéthylène chloré présente une teneur en chlore d'environ 25% à environ 48% en poids.

8. Une structure de toit selon la revendication 1, dans laquelle le copolymère de chlorure de vinyle à plastification interne est présent à concurrence d'environ 25% à environ 75% en poids et le polyéthylène chloré est également présent à concurrence d'environ 5% à environ 40% en poids de la membrane.

9. Une structure de toit selon la revendication 8, dans laquelle le polyéthylène chloré présente une teneur en chlore comprise entre environ 36% et environ 42% en poids.

10. Une structure de toit selon la revendication 8, dans laquelle le copolymère de chlorure de vinyle comprend d'environ 55% à environ 80% en poids de chlorure de vinyle, d'environ 10% à environ 35% en poids d'un acrylate d'alkyle en $C_6$ à $C_{10}$ et d'environ 5% à environ 25% en poids d'un bis(hydrocarbyl)vinylphosphonate.

11. Une structure de toit selon la revendication 9, dans laquelle le copolymère de chlorure de vinyl comprend d'environ 55% à environ 80% en poids de chlorure de vinyle, d'environ 10% à environ 35% en poids de 2-éthylhexylacrylate et d'environ 5% à environ 25% en poids de bis(béta-chloroéthyl)vinylphosphonate.

12. Une structure de toit selon la revendication 1, dans laquelle la membrane comprend également un terpolymère éthylène/monoxyde de carbone en quantité inférieure à celle de la résine à plastification interne.

13. Une structure de toit selon la revendication 1, dans laquelle la résine à plastification interne est présente à concurrence d'environ 25% à environ 75% par rapport au poids de la membrane et un terpolymère éthylène/monoxyde de carbone/acétate de vinyl est présent à concurrence d'environ 20% à environ 50% par rapport au poids de la membrane.